Europäisches Patentamt

(19) European Patent Office

Office européen des brevets

(11) Numéro de publication: **0 073 693**
A1

(12) # DEMANDE DE BREVET EUROPEEN

(21) Numéro de dépôt: 82401374.2

(22) Date de dépôt: 23.07.82

(51) Int. Cl.³: **B 27 B 19/09,** B 23 Q 11/00

(30) Priorité: 31.08.81 FR 8116557

(71) Demandeur: **Peugeot Outillage Electrique, Société dite:,**
**66/78 avenue François Arago, F-92000 Nanterre (FR)**

(43) Date de publication de la demande: 09.03.83
**Bulletin 83/10**

(72) Inventeur: **Baudry, Claude, 6 Avenue Lamartine,**
**F-95400 Arnouvelle Les Gonesse (FR)**

(84) Etats contractants désignés: **AT BE CH DE GB IT LI LU**
**NL SE**

(74) Mandataire: **Bressand, Georges et al, c/o CABINET**
**LAVOIX 2 Place d'Estienne d'Orves, F-75441 Paris**
**Cedex 09 (FR)**

(54) Machine-outil à main pourvue d'un outil de découpage, notamment scie sauteuse.

(57) Cette machine comporte un carter (1) dans lequel est délimitée une canalisation (20) d'aspiration des résidus de matière engendrés au cours du travail de l'outil (L). Cette canalisation est adaptée pour être raccordée à une source de dépression d'air telle qu'un aspirateur. La canalisation (20) communique avec un autre compartiment (16) du carter (1) dans lequel tourne une hélice de ventilation (15) pour le refroidissement du moteur d'entraînement (3). De la sorte, lorsqu'une source de dépression d'air n'est pas disponible, l'hélice (15) peut souffler les résidus de matière pour dégager le tracé devant être suivi par l'outil (L).

0073693

Machine-outil à main pourvue d'un outil de découpage, notamment scie sauteuse.-

La présente invention est relative aux machines-outils à main pourvus d'un outil de découpage animé d'un mouvement de va-et-vient. Plus particulièrement, elle a trait aux scies sauteuses ou alternatives destinées au découpage de matériaux divers, tels que le bois, le métal, la matière plastique et autres.

Pour guider convenablement une telle machine au cours du travail, il est nécessaire que l'utilisateur puisse observer facilement le tracé que doit suivre le trait de découpage effectué par la machine. Or, les résidus de matière engendrés au cours du travail se déposent sur l'ouvrage et cachent donc le trait que l'on a généralement apporté sur l'ouvrage pour déterminer le tracé.

Par conséquent, dans le passé, on a déjà mis au point des machines permettant de créer, dans la zone d'action de l'outil, un courant d'air qui souffle sur les résidus de matière, ce qui découvre le tracé au fur et à mesure de l'avancement de la machine, de sorte que l'utilisateur peut à tout moment l'observer facilement.

Par ailleurs, lorsque ces outils sont utilisés pour travailler sur certaines matières dont les résidus de découpage sont fins et par conséquent nuisibles à l'utilisateur puisqu'il risque de les respirer au cours du travail, il est également connu de munir les machines du genre indiqué ci-dessus de moyens d'aspiration destinés à être connectés à une source à dépression qui au cours du travail aspire en permanence les résidus engendrés dans la zone de travail.

Il en est ainsi notamment dans une machine-outil à main décrite dans le certificat d'utilité français n° 76 31 173 qui comporte une semelle au moyen de laquelle la machine peut être appliquée contre la surface de l'ouvrage et qui comprend une canalisation dont l'entrée est située dans la zone de travail de la machine et dont la sortie dirigée vers l'arrière par rapport au sens d'avancement de la machine, peut être raccordée à un tuyau

2

destiné à son tour à être connecté à une source de dépression d'air, telle qu'un aspirateur par exemple.

Cette machine connue présente des inconvénients. En effet, du fait que la canalisation d'aspiration est située dans la semelle, celle-ci devient relativement encombrante et on ne peut la conformer de façon qu'elle puisse être inclinée par rapport au carter de la machine, comme cela est habituellement le cas dans les scies sauteuses afin de pouvoir opérer un trait de découpage incliné par rapport à la surface de travail sur laquelle s'applique la semelle.

En outre, cette pièce est particulièrement sollicitée au cours du travail de la machine et on la réalise donc habituellement en acier. Cependant, compte tenu du volume qui est nécessaire lorsque la conduite d'aspiration est ménagée dans la semelle, celle-ci deviendrait relativement lourde et il est donc souhaitable pour réduire son poids de la réaliser dans ces conditions en une matière légère, telle que la matière plastique ou un métal léger ce qui fait qu'elle ne résiste pas de façon satisfaisante aux sollicitations qui lui sont imposées au cours de l'utilisation de la machine.

L'invention a donc pour but de créer une machine du type indiqué ci-dessus qui soit dépourvue des inconvénients précités.

L'invention a donc pour objet une machine-outil à main pourvue d'un outil de découpage, notamment scie sauteuse, comprenant un carter dans lequel est logé un mécanisme d'entraînement destiné à imprimer un mouvement de va-et-vient à l'outil de découpage, telle qu'une lame de scie par exemple, par l'intermédiaire d'un porte-outil monté oscillant dans ce carter, cette machine présentant en outre une canalisation d'aspiration des résidus de matière engendrée lors du travail de découpage, destinée à établir une communication de circulation d'air entre la zone d'action dudit outil et une source de dépression d'air,

3

caractérisée en ce que ladite canalisation est formée par une gaine ménagée dans le carter de la machine.

Il résulte de cettecaractéristique que la semelle peut être conformée de façon classique, de sorte qu'elle demeure inclinable et qu'elle peut être réalisée en une matière de rigidité élevée. Par ailleurs, la canalisation ayant une sortie qui est ménagée elle-même dans le carter, le tuyau de connexion avec une source de dépression d'air se trouve à un endroit qui rend la machine mieux maniable que celle décrite dans le certificat d'utilité précité.

L'invention est exposée ci-après plus en détail à l'aide de dessins représentant seulement un mode d'éxécution et sur lesquels :

- la Fig.1 est une vue élévation, partiellement en coupe, et avec arrachement partiel du carter, d'une machine réalisée selon l'invention;

- la Fig.2 représente un schéma électrique de celle-ci.

Conformément au mode de réalisation représenté sur les Figures, la machine-outil à main selon l'invention, est une scie sauteuse comprenant un carter 1 comportant deux demi-coquilles 1a et 1b réalisées de préférence en matière plastique moulée. Ce carter 1 délimite un logement 2 pour un moteur électrique d'entraînement 3 qui est de préférence du type universel, à alimentation par le secteur, par exemple. Le moteur comporte un inducteur 4 ainsi qu'un induit 5 qui est monté sur un arbre 6 tourillant dans des paliers 7 fixés dans le carter. Considéré dans le sens d'avancement de la machine au cours du travail, l'arbre 6 porte à son extrémité avant un pignon 8 engrénant avec un pignon manivelle 9 dont le maneton 10 coopère avec une plaque porte-outil 11 guidée dans le carter à l'aide de broches 12. Ainsi, ce porte-outil 11 est animé d'un mouvement de va-et-vient pour entraîner une lame de scie L qui est fixée sur lui.

Le pignon manivelle 9 tourillonne sur une broche

4

13 montée fixe dans le carter parallèlement à l'arbre 6 du moteur électrique 3.

Le pignon manivelle 9 ainsi qu'une partie de la plaque porte-outil 11 sont logés dans un compartiment 14 séparé du compartiment moteur 2 et remplis de préférence avec une graisse de lubrification. Une hélice de ventilation 15 est montée fixe sur l'arbre 6 du moteur 3. Cette hélice est disposée dans un compartiment 16 délimité dans le carter et communiquant avec l'extérieur d'une part par une entrée 17 ménagée à l'arrière dans le compartiment moteur 2 à travers ce compartiment pour refroidir le moteur, et d'autre part avec l'extérieur à travers une première sortie constituée par des ouies de ventilation 18 et par une seconde sortie qui est ménagée dans le carter et formée par une canalisation 19 orientée de l'arrière vers l'avant et destinée à créer un courant d'air dans la zone de travail Z de la machine. Il est à noter que des sorties d'air latérales non visibles sur le dessin sont également prévues.

Dans le carter est délimitée également une canalisation d'aspiration 20 dont l'entrée 20a débouche dans la zone de travail Z de la machine, qui traverse celle-ci de part en part et qui présente une sortie 20b à l'arrière, celle-ci étant conformée de manière à pouvoir recevoir l'embout E d'un tuyau d'aspiration T destiné à être relié à une source de dépression telle qu'un aspirateur par exemple. On notera que la canalisation 19 établit une communication entre la partie avant de la canalisation 20 et le compartiment 16 dans lequel est logée l'hélice de ventilation 15.

Le carter délimite également un logement 21 pour une lampe 22 d'éclairage de la zone de travail Z. Cette lampe est formée par une ampoule 23 munie d'une optique de concentration 24 et son socle 25 est fixé dans le carter par l'intermédiaire d'une douille d'amortissement 26 pour éviter la transmission à l'ampoule 22 des vibrations engendrées au cours du travail.

5

La machine comporte également une semelle 27 de forme classique et pouvant être placée dans plusieurs positions dans lesquelles elle est respectivement bloquée grâce à une vis 28. La position arrière de la semelle correspond à celle dans laquelle la lame de scie L peut travailler dans des angles d'un ouvrage, par exemple. Par ailleurs, la semelle peut être placée sélectivement dans des positions inclinées différentes grâce à des moyens qui ne sont pas visibles sur le dessin et qui permettent d'obtenir une inclinaison du trait de scie par rapport à la surface S de l'ouvrage O sur laquelle s'appuie la semelle 27 au cours du travail.

Un cache 29 réalisé en une matière transparente peut être fixé devant la face avant de la machine et coopère avec la semelle pour délimiter une chambre de travail 30 à partir de laquelle sont aspirées les poussières à travers la canalisation 20. Lorsqu'aucune source de dépression n'est disponible, ce cache peut avantageusement être glissé vers le haut moyennant quoi l'hélice de ventilation 15 peut souffler les poussières engendrées au cours du travail vers l'avant pour dégager le tracé à suivre par la lame de scie.

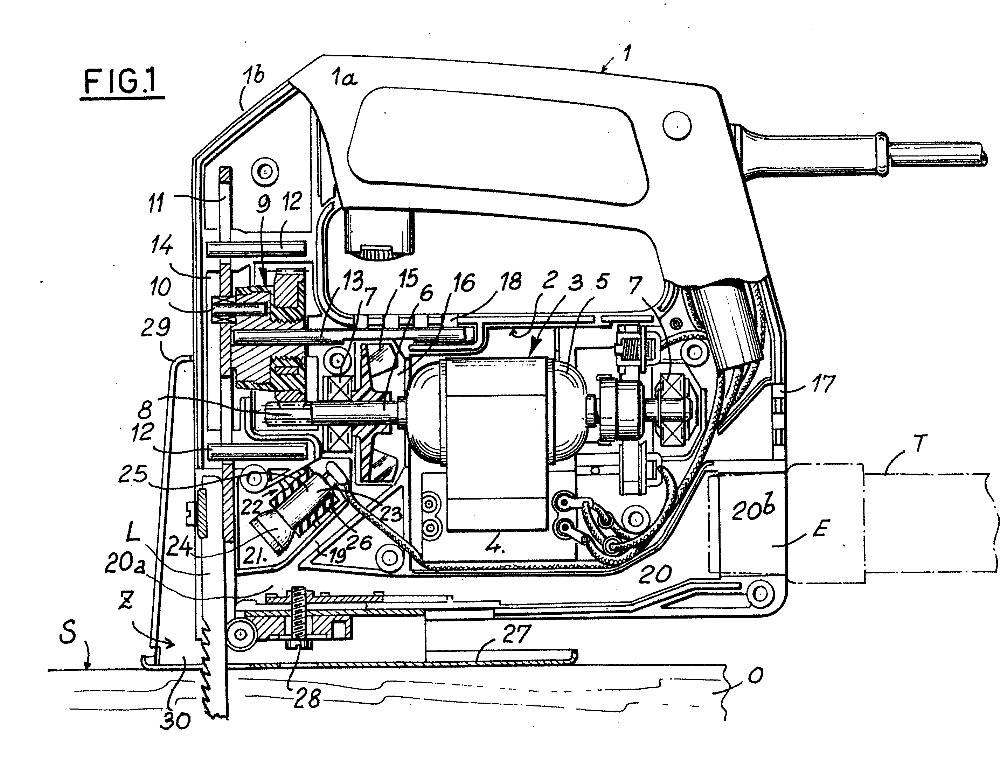

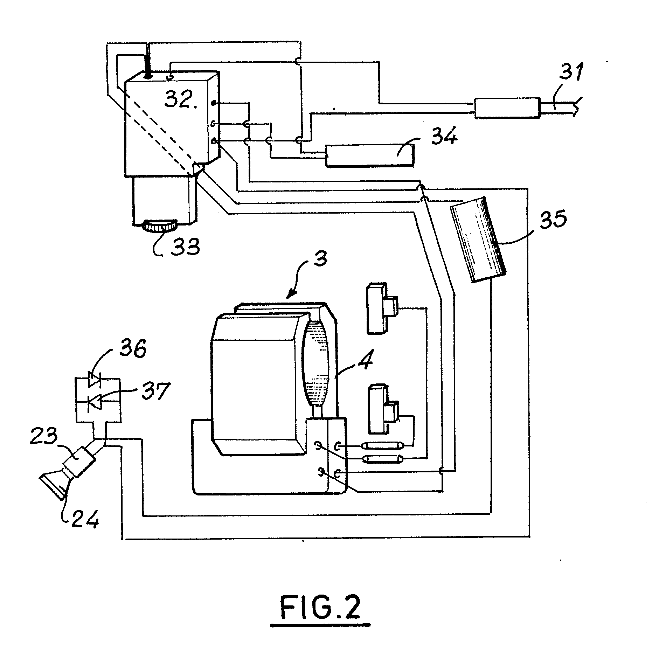

On va se référer maintenant à la Fig.2 sur laquelle apparaît un schéma simplifié de la partie électrique de la machine représentée sur la Fig.1.

Le moteur électrique 3 dont on ne voit sur la Fig.2 que l'inducteur 4 et les balais, est alimenté par un cordon de secteur 31 par exemple, à travers un interrupteur 32 qui dans le cas représenté est en même temps un variateur de vitesse dont la course peut être limitée plus ou moins par un bouton rotatif 33 pour permettre la programmation de la vitesse de travail. Le variateur 32 est connu en soi et n'est pas décrit en détail ici. Un condensateur d'antiparasitages 34 est relié à ce variateur. La lampe d'éclairage 23 est alimentée directement à partir du cordon 31 par l'intermédiaire d'une impédance de réduction de tension 35 telle qu'un condensateur par exemple, branché en série. Ainsi, la lampe 23 est de préférence du type à basse tension (6 volts par exemple) dont le filament présente une rigidité résistant suffisamment aux vibrations qui sont engendrées au cours du travail, ce qui ne serait pas le cas si cette lampe fonctionnait à la tension du secteur de 220 Volts par exemple. Des diodes 36 et 37 montées en tête-bêche, sont reliées ensemble en parallèle aux bornes de la lampe 23 afin d'éviter que des surtensions soient appliquées à cette dernière au cours de la mise en marche de la machine.

0073693

7

REVENDICATIONS

1. Machine-outil à main pourvue d'un outil de découpage notamment scie sauteuse, comprenant un carter (1) dans lequel est logé un mécanisme d'entraînement (3, 6,8,9,11) destiné à imprimer un mouvement de va-et-vient à l'outil de découpage (L), tel qu'une lame de scie par exemple, par l'intermédiaire d'un porte-outil (11) monté oscillant dans ce carter (1), cette machine présentant en outre, une canalisation d'aspiration des résidus de matière engendrée lors du travail de découpage, destinée à établir une communication de circulation d'air entre la zone de découpage (Z) et une source de dépression d'air, caractérisée en ce que ladite canalisation est formée par une gaine (20) ménagée dans le carter (1).

2. Machine-outil suivant la revendication 1, caractérisée en ce que ladite gaine (20) s'étend entre une entrée (20a) située près de la zone de découpage (Z) de l'outil (L) et une sortie (20b) située à l'arrière du carter (1), considéré par rapport au sens normal d'avancement de la machine au cours du travail.

3. Machine-outil suivant la revendication 2, dans laquelle le carter (1) présente un compartiment (16) dans lequel est logée une hélice de ventilation (15) couplée auxdits moyens d'entraînement pour refroidir au moins une partie de ceux-ci, caractérisée en ce que ledit compartiment (16) est relié à ladite gaine (20) par l'intermédiaire d'une canalisation (19) délimitée dans le carter (1) pour permettre le soufflage des résidus de matière engendrés au cours du travail de l'outil (L) en l'absence de source de dépression d'air.

4. Machine-outil suivant la revendication 3, caractérisée en ce que le compartiment (16) de l'hélice communique avec l'extérieur à travers une sortie (18) devant laquelle est disposée une broche (13) sur laquelle tourillonne un élément (9) desdits moyens d'entraînement de préférence un pignon manivelle destiné à engendrer le mouvement de va-et-vient de l'outil (L).

5. Machine-outil suivant l'une quelconque des revendications 1 à 4, caractérisée en ce que ledit carter (1) délimite en outre un compartiment (21) dans lequel est logé un dispositif d'éclairage (22) de la zone de découpage (Z).

6. Machine-outil suivant la revendication 5, caractérisée en ce que le dispositif d'éclairage comporte une ampoule (23) munie d'un optique de concentration (24) et montée dans un socle (25) fixé dans le carter (1) par l'intermédiaire d'un élément amortisseur (26).

7. Machine-outil suivant la revendication 6, caractérisée en ce que ladite ampoule (23) est d'un type fonctionnant à basse tension.

8. Machine-outil suivant la revendication 7, caractérisée en ce que ladite ampoule (23) est reliée au cordon d'alimentation (31) de la machine par l'intermédiaire d'une impédance (35), de préférence capacitive, servant à l'abaissement de la tension.

9. Machine-outil à main pourvue d'un outil de découpage notamment scie sauteuse, comprenant un carter (1) dans lequel est logé un mécanisme d'entraînement (3,6,8, 9;11) destiné à imprimer un mouvement de va-et-vient à l'outil de découpage (L), tel qu'une lame de scie par exemple, par l'intermédiaire d'un porte-outil (11) monté oscillant dans ce carter (1), caractérisée en ce que ledit carter (1) délimite un compartiment (21) dans lequel est logé un dispositif d'éclairage (22) de la zone de découpage (Z) de l'outil (L).

FIG.1

FIG.2

Office européen
des brevets

**RAPPORT DE RECHERCHE EUROPEENNE**

0073693

Numéro de la demande

EP  82 40 1374

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 27 B  19/09 |
| A | US-A-3 457 796  (LEACH) | 1-9 | B 23 Q  11/00 |
| | --- | | |
| A | US-A-4 051 880  (HESTILY) | | |
| | --- | | |
| A | DE-A-2 754 186  (LICENTIA) | | |
| | ----- | | |

**DOMAINES TECHNIQUES RECHERCHES (Int. Cl. ³)**

B 27 B  19/00
B 23 Q  11/00
B 23 D  49/00

Le présent rapport de recherche a été établi pour toutes les revendications

| Lieu de la recherche | Date d'achèvement de la recherche | Examinateur |
|---|---|---|
| LA HAYE | 16-11-1982 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82